# EUROPEAN PATENT SPECIFICATION

(11) **EP 2 907 844 B1**
(45) Date of publication and mention of the grant of the patent: **20.09.2017**
(21) Application number: 12886336.2
(22) Date of filing: 11.10.2012
(51) Int. Cl.: C08L 27/04, C08J 5/18, C08K 5/07, C08K 5/13, C08K 5/20, C08K 5/23, C08K 5/3472

(54) **RESIN COMPOSITION FOR PRINTING FILM AND PRINTING FILM**
HARZZUSAMMENSETZUNG FÜR DRUCKFOLIE UND DRUCKFOLIE
COMPOSITION DE RÉSINE POUR FILM D'IMPRESSION ET FILM D'IMPRESSION

(43) Date of publication of application: 19.08.2015
(73) Proprietor: Adeka Corporation, Tokyo 116-0012 (JP)
(72) Inventor: SHIMIZU, Yosuke, Saitama-shi Saitama 336-0022 (JP); HONMA, Yasuhiro, Saitama-shi Saitama 336-0022 (JP); MITSUDERA, Taro, Saitama-shi Saitama 336-0022 (JP)
(74) Representative: Gill Jennings & Every LLP
(86) International application number: PCT/JP2012/076363
(87) International publication number: WO 2014/057563

(56) References cited:
- WO-A1-2006/006386
- JP-A- H10 308 122
- JP-A- H10 308 122
- JP-A- 2005 048 106
- JP-A- 2005 048 106
- JP-A- 2011 079 948
- JP-A- 2011 079 948
- JP-A- 2012 219 244

## Description

### TECHNICAL FIELD

The present invention relates to a resin composition for a printing film, and a printing film. More particularly, the present invention relates to a resin composition for a printing film, from which a printing film having excellent colorability, heat resistance and printability can be formed; and a printing film using the resin composition.

### BACKGROUND ART

Printed plastic films are used for a wide variety of applications such as packages of wrapping materials, stickers and toys; however, plastics are characterized in that printing cannot easily be performed thereon because of having less surface irregularities and being less porous as compared to papers. Particularly, polyolefins, polyesters and the like that are often used as a printing film have low polarity and show poor adhesion with inks; therefore, the printability is improved by forming irregularities and generating polar carboxyl groups and hydroxy groups on the film surface by corona discharge treatment.

Meanwhile, vinyl chloride-based resins such as a vinyl chloride resin have polar groups; therefore, they are advantageous in that printing can be performed thereon without any surface treatment.

Vinyl chloride-based resins have excellent flame retardancy and chemical resistance and are thus used also in a variety of applications other than printing films; however, chlorine-containing resins have drawbacks in that they are thermally decomposed to cause dehydrochlorination, which leads to a reduction in the mechanical strength and coloration and consequently impairs the marketability.

In order to solve such drawbacks, a variety of stabilizers have been developed and, particularly, mixtures of a lead compound, a cadmium compound and a barium compound and the like are known to have excellent stabilization effect. However, in recent years, the use of lead compounds and cadmium compounds tends to be restricted from the safety standpoint, and stabilization using these compounds have been gradually replaced by stabilization using a combination of a zinc compound and an organic acid salt of an alkaline earth metal or an inorganic compound such as hydrotalcite or zeolite, which is highly safe.

Still, sufficient stabilization effect cannot be attained by such low-toxic stabilizers by themselves; therefore, a variety of additives for improving the resistance against light, heat, oxidation and the like, such as organophosphite compounds, epoxy compounds, phenolic antioxidants, benzophenone-based and benzotriazole-based ultraviolet absorbers and hindered amine-based light stabilizers, are used in combination.

Benzotriazole compounds are known as heavy metal deactivators and, for example, Patent Document 1 proposes a method of thermally stabilizing the hue of a vinyl chloride-based resin by using a benzotriazole compound containing a nitro group, a halogen group or an alkoxyl group. Patent Document 2 proposes a flexible polyvinyl chloride resin composition comprising dialkyl phthalate, chlorinated paraffin, clay and a benzotriazole compound and, in Patent Document 3, the use of a combination of a benzotriazole compound and a β-diketone compound is proposed. Furthermore, Patent Document 4 proposes the use of a salicylamide compound as a heavy metal deactivator and, in Patent Document 5, the use of a combination of a benzotriazole compound and a salicylamide compound in a vinyl chloride-based resin is proposed.

### RELATED ART DOCUMENTS

### PATENT DOCUMENTS

Patent Document 1: Japanese Patent Publication (Kokoku) No. S47-41735
Patent Document 2: Japanese Unexamined Patent Application Publication No. S56-147839
Patent Document 3: Japanese Unexamined Patent Application Publication No. H10-308122
Patent Document 4: Japanese Unexamined Patent Application Publication No. S47-39141
Patent Document 5: WO 2006/006386

### SUMMARY OF THE INVENTION

### PROBLEMS TO BE SOLVED BY THE INVENTION

In order to obtain a high-quality print, not only the adhesion between an ink and a film to be printed, but also properties of the film such as heat resistance and colorability (color resistance) are important. For example, in the case of multi-color printing, since printing and drying are repeated several times, high heat resistance is required. Further, in the first place, a printing film that is colored or degraded by heating performed in film processing is not suitable for such printing process.

From the above-described standpoints, that is, from the standpoints of the printability, colorability and heat resistance, those existing printing films still have room for improvements.

In view of the above, an object of the present invention is to provide a resin composition for a printing film, which has excellent colorability, heat resistance and printability, as well as a printing film.

### MEANS FOR SOLVING THE PROBLEMS

The present inventors intensively studied to discover that the above-described problems can be solved by incorporating a combination of a specific benzotriazole compound and/or a specific salicylamide compound, a β-diketone compound and a phenolic antioxidant into a vinyl chloride-based resin, thereby completing the present invention.

That is, the resin composition for a printing film according to the present invention is characterized by comprising, with respect to 100 parts by mass of a vinyl chloride-based resin: (A) 0.001 to 1 part by mass of (a-1) at least one benzotriazole compound represented by the following Formula (I) and/or (a-2) at least one salicylamide compound represented by the following Formula (II); (B) 0.001 to 1 part by mass of a β-diketone compound; and (C) 0.001 to 1 part by mass of a phenolic antioxidant: 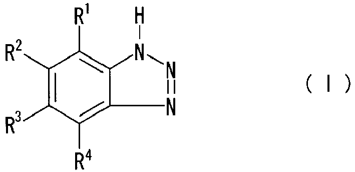 (wherein, R¹, R², R³ and R⁴ each independently represent a hydrogen atom, a halogen atom, a hydroxy group, a nitro group, a carboxyl group, an alkyl group having 1 to 12 carbon atoms, an alkoxycarbonyl group having 2 to 12 carbon atoms, or an alkanoylamino group having 1 to 12 carbon atoms) 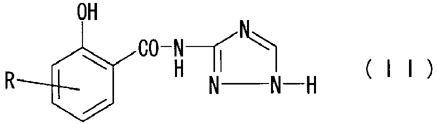 (wherein, R represents a hydrogen atom, an alkyl group having 1 to 12 carbon atoms, or an alkoxy group having 1 to 12 carbon atoms).

In the resin composition for a printing film according to the present invention, it is preferred that the benzotriazole compound, which is the (a-1) component, be 1,2,3-benzotriazole; and that the salicylamide compound, which is the (a-2) component, be N-(1,2,4-triazol-3-yl)salicylamide.

The printing film of the present invention is characterized in that it is obtained by molding any of the above-described resin compositions for a printing film. It is preferred that the printing film have a thickness of 0.01 to 1 mm.

### EFFECTS OF THE INVENTION

According to the present invention, a resin composition for a printing film which has excellent colorability, heat resistance and printability as well as a printing film can be provided.

### MODE FOR CARRYING OUT THE INVENTION

In the present invention, the component (A) is either one or both of (a-1) at least one benzotriazole compound represented by the Formula (I) and (a-2) at least one salicylamide compound represented by the Formula (II).

Examples of the halogen atom that may be represented by R¹, R², R³ and R⁴ in the Formula (I) include fluorine, chlorine, bromine and iodine. Examples of the alkyl group having 1 to 12 carbon atoms include methyl, ethyl, propyl, isopropyl, butyl, isobutyl, sec-butyl and tert-butyl, and alkyl groups having 1 to 4 carbon atoms are preferred. Examples of the alkoxycarbonyl group having 2 to 12 carbon atoms include groups such as methoxycarbonyl, ethoxycarbonyl, propoxycarbonyl and butoxycarbonyl, and alkoxycarbonyl groups having 2 to 5 carbon atoms are preferred. Examples of the alkanoylamino group having 1 to 12 carbon atoms include groups such as methanoylamino, ethanoylamino, propanoylamino, butanoylamino, octyloylamino and decanoylamino, and alkanoylamino groups having 1 to 4 carbon atoms are preferred.

Specific examples of the benzotriazole compound which is the component (a-1) include 1,2,3-benzotriazole, 4-chloro-1,2,3-benzotriazole, 4-hydroxy-1,2,3-benzotriazole, 4-nitro-1,2,3-benzotriazole, 5-carboxy-1,2,3-benzotriazole, 4-methyl-1,2,3-benzotriazole, 6-methylbenzotriazole, 6-butyl-1,2,3-benzotriazole, 6-dodecyl-1,2,3-benzotriazole, 5-methoxycarbonyl-1,2,3-benzotriazole and 6-octyloylamino-1,2,3-benzotriazole, among which lower alkyl-substituted 1,2,3-benzotriazoles such as 1,2,3-benzotriazole, 4-methyl-1,2,3-benzotriazole, 6-methylbenzotriazole and the like are preferred and 1,2,3-benzotriazole is particularly preferred. These benzotriazole compounds may be used individually, or two or more thereof may be used in combination.

Examples of the alkyl group having 1 to 12 carbon atoms that may be represented by R in the Formula (II) include linear or branched alkyl groups such as methyl, ethyl, propyl, isopropyl, butyl, isobutyl, sec-butyl, tert-butyl, pentyl, isopentyl, sec-pentyl, hexyl, heptyl, octyl, isooctyl, sec-octyl, 2-ethylhexyl, nonyl, isononyl and decyl. Examples of the alkoxy group having 1 to 12 carbon atoms that may be represented by R include linear or branched groups such as methoxy, ethoxy, propoxy, isopropoxy, butoxy, pentoxy, hexoxy, heptoxy, octoxy, nonyloxy and decyloxy.

Specific examples of the salicylamide compound which is the component (a-2) include N-(1,2,4-triazol-3-yl)salicylamide, N-(1,2,4-triazol-3-yl)-3-methylsalicylamide, N-(1,2,4-triazol-3-yl)-5-methylsalicylamide, N-(1,2,4-triazol-3-yl)-5-tert-octylsalicylamide and N-(1,2,4-triazol-3-yl)-4-methoxysalicylamide, among which N-(1,2,4-triazol-3-yl)salicylamide is particularly preferred. These salicylamide compounds may be used individually, or two or more thereof may be used in combination.

The above-described component (A) is blended in an amount of 0.001 to 10 parts by mass, preferably 0.01 to 5 parts by mass, more preferably 0.01 to 1 part by mass, with respect to 100 parts by mass of a vinyl chloride-based resin. When the amount is less than 0.001 parts by mass, the effect of the component (A) is not sufficiently exerted, while when the amount is greater than 10 parts by mass, there are drawbacks such as a reduction in the printability of a film produced by molding the resin composition.

In the present invention, the β-diketone compound, which is the component (B), is not particularly restricted as long as it is a compound having a structure in which ketone carbonyl groups are aligned with each other at β-positions. Specific examples of the β-diketone compound include acetylacetone, triacetylmethane, 2,4,6-heptatrione, butanoylacetylmethane, lauroylacetylmethane, palmitoylacetylmethane, stearoylacetylmethane, phenylacetylacetylmethane, dicyclohexylcarbonylmethane, benzoylformylmethane, benzoylacetylmethane, dibenzoylmethane, octanoylbenzoylmethane, palmitoylbenzoylmethane, stearoylbenzoylmethane, bis(4-octylbenzoyl)methane, benzoyldiacetylmethane, 4-methoxybenzoylbenzoylmethane, bis(4-carboxymethylbenzoyl)methane, 2-carboxymethylbenzoylacetyloctylmethane, dehydroacetic acid, cyclohexane-1,3-dione, methyl 3,6-dimethyl-2,4-dioxycyclohexane-1 carboxylate, 2-acetylcyclohexanone, dimedone and 2-benzoylcyclohexane-1-one. Thereamong, dibenzoylmethane, palmitoylbenzoylmethane and stearoylbenzoylmethane are preferred. Further, metal salts of these β-diketone compounds can also be used, and examples of a metal species that can yield a β-diketone metal salt include alkali metals such as lithium, sodium and potassium; alkaline earth metals such as magnesium, calcium, strontium and barium; zinc; aluminum; tin; and alkyl tin.

The (B) β-diketone compound is blended in an amount of 0.001 to 1 part by mass, preferably 0.005 to 0.5 parts by mass, with respect to 100 parts by mass of a vinyl chloride-based resin. When the amount is less than 0.001 parts by mass, the effect of the (B) β-diketone compound is not sufficiently exerted, while when the amount is greater than 1 part by mass, the heat resistance may be reduced.

In the present invention, the phenolic antioxidant, which is the component (C), is not particularly restricted as long as it is a known phenolic antioxidant. Specific examples of the phenolic antioxidant include 2,6-di-tert-butyl-p-cresol, 2,6-diphenyl-4-octadecyloxyphenol, stearyl(3,5-di-tert-butyl-4-hydroxyphenyl)propionate, distearyl(3,5-di-tert-butyl-4-hydroxybenzyl)phosphonate, thiodiethylene-bis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazine, 2,2'-methylene-bis(4-methyl-6-tert-butylphenol), bis[3,3-bis(4-hydroxy-3-tert-butylphenyl)butyric acid]glycol ester, 4,4'-butylidene-bis(6-tert-butyl-m-cresol), 2,2'-ethylidene-bis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3,5-di-tert-butyl-4-hydroxyphenyl)propionate]methane, 2-tert-butyl-4-methyl-6-(2-acryloyloxy-3-tert-butyl-5-methylbenzyl)phenol, 3,9-bis[1,1-dimethyl-2-hydroxyethyl]-2,4,8,10-tetraoxaspiro[5,5]undecane-bis[β-(3-tert-butyl-4-hydroxy-5-butylphenyl)propionate], and triethylene glycol-bis[β-(3-tert-butyl-4-hydroxy-5-methylphenyl)propionate]. Thereamong, phenolic antioxidants having one to four 3,5-di-tert-butyl-4-hydroxyphenyl structures, such as tetrakis[methylene-3-(3,5-di-tert-butyl-4-hydroxyphenyl)propionate]methane, are preferred.

The (C) phenolic antioxidant is blended in an amount of 0.001 to 1 part by mass, preferably 0.005 to 0.5 parts by mass, with respect to 100 parts by mass of a vinyl chloride-based resin. When the amount is less than 0.001 parts by mass, the effect of the (C) phenolic antioxidant is not sufficiently exerted, while when the amount is greater than 1 part by mass, the colorability may be impaired.

The vinyl chloride-based resin is not particularly restricted by its polymerization method and it may be produced by bulk polymerization, solution polymerization, suspension polymerization, emulsion polymerization or the like. Examples of the vinyl chloride-based resin include chlorine-containing resins such as polyvinyl chloride, chlorinated polyvinyl chloride, polyvinylidene chloride, chlorinated polyethylene, vinyl chloride-vinyl acetate copolymers, vinyl chloride-ethylene copolymers, vinyl chloride-propylene copolymers, vinyl chloride-styrene copolymers, vinyl chloride-isobutylene copolymers, vinyl chloride-vinylidene chloride copolymers, vinyl chloride-styrene-maleic anhydride ternary copolymers, vinyl chloride-styrene-acrylonitrile copolymers, vinyl chloride-butadiene copolymers, vinyl chloride-isoprene copolymers, vinyl chloride-chlorinated propylene copolymers, vinyl chloride-vinylidene chloride-vinyl acetate ternary copolymers, vinyl chloride-maleic acid ester copolymers, vinyl chloride-methacrylate copolymers, vinyl chloride-acrylonitrile copolymers and copolymers of vinyl chloride and various vinyl ethers; blend products of these resins with each other; and blend products, block copolymers, graft copolymers and the like that are formed by these resins with other chlorine-free synthetic resins, such as acrylonitrile-styrene copolymers, ethylene-vinyl acetate copolymers, ethylene-ethyl(meth)acrylate copolymers and polyesters.

In the resin composition for a printing film according to the present invention, a metallic stabilizer normally used in vinyl chloride-based resins may be added, and examples thereof include lead-based stabilizers, organic acid metal salts, organotin-based stabilizers, and composite stabilizers thereof.

Examples of the lead-based stabilizers include white lead, basic lead silicate, basic lead sulfate, dibasic lead sulfate, tribasic lead sulfate, basic lead sulfite, dibasic lead phosphite, silica gel-coprecipitated lead silicate, dibasic lead phthalate, tribasic lead maleate, lead salicylate, lead stearate, basic lead stearate, dibasic lead stearate, lead laurate, lead octylate, lead 12-hydroxystearate, lead behenate and lead naphthenate.

Examples of the organic acid metal salts that can be used include metal salts (Li, Na, K, Ca, Ba, Mg, Sr, Zn, Cd, Sn, Cs and Al) of carboxylic acids, organophosphoric acids and phenols. Examples of the carboxylic acids include caproic acid, caprylic acid, pelargonic acid, 2-ethylhexylic acid, capric acid, neodecanoic acid, undecylenic acid, lauric acid, myristic acid, palmitic acid, stearic acid, isostearic acid, 12-hydroxystearic acid, chlorostearic acid, 12-ketostearic acid, phenylstearic acid, ricinoleic acid, linoleic acid, linolenic acid, oleic acid, arachic acid, behenic acid, erucic acid, brassidic acid and similar acids; naturally-occurring mixtures of these acids, such as tallow fatty acids, coconut oil fatty acids, tung oil fatty acids, soybean oil fatty acids and cotton seed oil fatty acids; benzoic acid; p-t-butylbenzoic acid; ethylbenzoic acid; isopropylbenzoic acid; toluic acid; xylic acid; salicylic acid; 5-t-octylsalicylic acid; naphthenic acid; and cyclohexanecarboxylic acid. Examples of the organophosphoric acids include mono- or di-octylphosphoric acid, mono- or di-dodecylphosphoric acid, mono- or di-octadecylphosphoric acid, mono- or di-(nonylphenyl)phosphoric acid, nonylphenyl phosphonate and stearyl phosphonate, and examples of the phenols include phenol, cresol, ethylphenol, cyclohexylphenol, nonylphenol and dodecylphenol. The metal salts of these organic acids may be normal salts, acidic salts, basic salts or perbasic complexes.

Examples of the organotin-based stabilizers include methylstannoic acid, butylstannoic acid, octylstannoic acid, dimethyltin oxide, dibutyltin oxide, dioctyltin oxide, dimethyltin sulfide, dibutyltin sulfide, dioctyltin sulfide, monobutyltin oxide/sulfide, methylthiostannoic acid, butylthiostannoic acid, octylthiostannoic acid, dibutyltin dilaurate, dibutyltin distearate, dioctyltin dioleate, dibutyltin basic laurate, dibutyltin dicrotonate, dibutyltin bis(butoxydiethylene glycol maleate), dibutyltin methyl octyl neopentyl glycol maleate, dibutyltin isooctyl-1,4-butanediol maleate, dibutyltin dimethacrylate, dibutyltin dicinnamate, dioctyltin bis(oleyl maleate), dibutyltin bis(stearyl maleate), dibutyltin itaconate, dioctyltin maleate, dimethyltin dicrotonate, dioctyltin bis(butyl maleate), dibutyltin dimethoxide, dibutyltin dilauroxide, dioctyltin ethylene glycoxide, pentaerythritol-dibutyltin oxide condensate, dibutyltin bis(lauryl mercaptide), dimethyltin bis(stearyl mercaptide), monobutyltin tris(lauryl mercaptide), dibutyltin β-mercaptopropionate, dioctyltin β-mercaptopropionate, dibutyltin mercaptoacetate, monobutyltin tris(isooctyl mercaptoacetate), monooctyltin tris(2-ethylhexyl mercaptoacetate), dibutyltin bis(isooctyl mercaptoacetate), dioctyltin bis(isooctyl mercaptoacetate), dioctyltin bis(2-ethylhexyl mercaptoacetate), dimethyltin bis(isooctyl mercaptoacetate), dimethyltin bis(isooctyl mercaptopropionate), monobutyltin tris(isooctyl mercaptopropionate), bis[monobutyldi(isooctoxycarbonylmethylenethio)tin]sulfide, bis [dibutylmono(isooctoxycarbonylmethylenethio)tin] sulfide, monobutylmonochlorotin bis(isooctyl mercaptopropionate), monobutylmonochlorotin bis(isooctyl mercaptoacetate), monobutylmonochlorotin bis(lauryl mercaptide), butyltin bis(ethylcellosolve maleate), bis(dioctyltin butylmaleate)maleate, bis(methyltin diisooctyl thioglycolate)disulfide, bis(methyl/dimethyltin mono/diisooctyl thioglycolate)disulfide, bis(methyltin diisooctyl thioglycolate)trisulfide, bis(butyltin diisooctyl thioglycolate)trisulfide, and 2-butoxycarbonylethyltin tris(butyl thioglycolate).

The metallic stabilizer is added in an amount of preferably 0.05 to 10 parts by mass with respect to 100 parts by mass of the vinyl chloride-based resin.

Further, in the resin composition for a printing film according to the present invention, a plasticizer may be incorporated as well. As the plasticizer, any plasticizer normally used in vinyl chloride-based resins can be used arbitrarily, and examples thereof include phthalate-based plasticizers such as dibutyl phthalate, butylhexyl phthalate, diheptyl phthalate, dioctyl phthalate, diisononyl phthalate, diisodecyl phthalate, dilauryl phthalate, dicyclohexyl phthalate and dioctyl terephthalate; adipate-based plasticizers such as dioctyl adipate, diisononyl adipate, diisodecyl adipate and di(butyldiglycol)adipate; phosphate-based plasticizers such as triphenyl phosphate, tricresyl phosphate, trixylenyl phosphate, tri(isopropylphenyl)phosphate, triethyl phosphate, tributyl phosphate, trioctyl phosphate, tri(butoxyethyl)phosphate and octyldiphenyl phosphate; polyester-based plasticizers in which ethylene glycol, diethylene glycol, triethylene glycol, 1,2-propylene glycol, 1,3-propylene glycol, 1,3-butane diol, 1,4-butane diol, 1,5-hexane diol, 1,6-hexane diol, neopentyl glycol or the like is used as a polyhydric alcohol, oxalic acid, malonic acid, succinic acid, glutaric acid, adipic acid, pimelic acid, suberic acid, azelaic acid, sebacic acid, phthalic acid, isophthalic acid, terephthalic acid or the like is used as a dibasic acid and, as required, a monohydric alcohol or a monocarboxylic acid is used as a stopper; tetrahydrophthalic acid-based plasticizers; azelaic acid-based plasticizers; sebacic acid-based plasticizers; stearic acid-based plasticizers; citric acid-based plasticizers; trimellitic acid-based plasticizers; pyromellitic acid-based plasticizers; and biphenylene polycarboxylic acid-based plasticizers.

The above-described plasticizer is blended in an amount of preferably 10 to 100 parts by mass, more preferably 20 to 80 parts by mass, with respect to 100 parts by mass of the vinyl chloride-based resin.

In the resin composition for a printing film according to the present invention, a variety of additives that are generally used in vinyl chloride-based resins may be further incorporated, and examples thereof include organic phosphite compounds, sulfur-based antioxidants, hydrotalcite compounds, epoxy compounds, polyols, ultraviolet absorbers, hindered amine-based light stabilizers, inorganic stabilizers, long-chain fatty acids, lubricants, fillers and pigments.

Examples of the organic phosphite compounds include triphenyl phosphite, tris(2,4-di-tert-butylphenyl)phosphite, tris(nonylphenyl)phosphite, tris(dinonylphenyl)phosphite, tris(mono-, di-mixed nonylphenyl)phosphite, diphenyl acid phosphite, 2,2'-methylene-bis(4,6-di-tert-butylphenyl)octyl phosphite, diphenyldecyl phosphite, phenyldiisodecyl phosphite, tributyl phosphite, tri(2-ethylhexyl)phosphite, tridecyl phosphite, trilauryl phosphite, dibutyl acid phosphite, dilauryl acid phosphite, trilauryl trithiophosphite, bis(neopentyl glycol)·1,4-cyclohexane dimethyl diphosphite, bis(2,4-di-tert-butylphenyl)pentaerythritol diphosphite, bis(2,6-di-tert-butyl-4-methylphenyl)pentaerythritol diphosphite, distearyl pentaerythritol diphosphite, phenyl-4,4'-isopropylidenediphenol-pentaerythritol diphosphite, tetra(C₁₂₋₁₅ mixed alkyl)-4,4'-isopropylidenediphenyl diphosphite, hydrogenated 4,4'-isopropylidenediphenol polyphosphite, bis(octylphenyl)·bis[4,4'-n-butylidene-bis(2-tert-butyl-5-methylphenol)]-1,6-hexane diol-diphosphite, tetratridecyl-4,4'-butylidene-bis(2-tert-butyl-5-methylphenol)diphosphite, hexa(tridecyl)-1,1,3-tris(2-methyl-5-tert-butyl-4-hydroxyphenyl)butane-triphosphonite, 9,10-dihydro-9-oxa-10-phosphaphenanthrene-10-oxide, and 2-butyl-2-ethylpropane diol-2,4,6-tri-tert-butylphenol monophosphite.

Examples of the sulfur-based antioxidants include dialkyl thiodipropionates such as dilauryl thiodipropionate, dimyristyl thiodipropionate, myristylstearyl thiodipropionate and distearyl thiodipropionate; and β-alkylmercaptopropionates of polyols, such as pentaerythritol tetra(β-dodecylmercaptopropionate).

As the hydrotalcite compound, a complex salt compound which is represented by the following Formula (III) and composed of magnesium and aluminum or zinc, magnesium and aluminum is preferably used, and crystal water contained therein may be dehydrated as well.

Mgₓ₁Znₓ₂Al₂·(OH)₂ₓ₁₊₂ₓ₂₊₄·(CO₃)_{1-y1/2}(ClO₄)_{y1}·mH₂O (III)

(wherein, x1, x2 and y1 each represent a number that satisfies the conditions represented by the following equations; and m represents 0 or any integer: 0 ≤ x2/x1 < 10,2 ≤ x1 + x2 < 20,0 ≤ y1 ≤2)

The hydrotalcite compound may be a natural-occurring or synthetic product. Examples of a method of synthesizing a synthetic hydrotalcite include known methods that are described in Japanese Patent Publication (Kokoku) No. S46-2280, Japanese Patent Publication (Kokoku) No. S50-30039, Japanese Patent Publication (Kokoku) No. S51-29129, Japanese Patent Publication (Kokoku) No. H3-36839, Japanese Unexamined Patent Application Publication No. S61-174270 and the like. Further, in the present invention, the above-described hydrotalcite compounds can be used without any restriction in terms of the crystal structure, crystal particle size and the like.

The above-described hydrotalcite compounds may also be coated with, for example, a higher fatty acid such as stearic acid, a higher fatty acid metal salt such as alkali metal oleate, a metal organic sulfonate such as alkali metal dodecylbenzenesulfonate, a higher fatty acid amide, a higher fatty acid ester, or a wax.

Examples of the epoxy compounds include epoxidized animal and plant oils such as epoxidized soybean oils, epoxidized linseed oils, epoxidized tung oils, epoxidized fish oils, epoxidized beef tallow oils, epoxidized castor oils and epoxidized safflower oils; and epoxy compounds such as epoxidized methyl-, butyl-2-ethylhexyl- and stearyl-stearate, epoxidized polybutadiene, tris(epoxypropyl)isocyanurate, epoxidized tall oil fatty acid esters, epoxidized linseed oil fatty acid esters, bisphenol A diglycidyl ether, vinylcyclohexene diepoxide, dicyclohexene diepoxide, and 3,4-epoxycyclohexyl methylepoxycyclohexanecarboxylate. Here, in cases where an epoxy compound also used as a plasticizer, such as an epoxidized soybean oil, is incorporated, since this reduces the rigidity of the resulting molded article, the epoxy compound cannot be used in an amount of greater than 25 parts by mass combined with the above-described plasticizer(s), with respect to 100 parts by mass of the vinyl chloride-based resin.

Examples of the polyols include trimethylolpropane, ditrimethylolpropane, pentaerythritol, dipentaerythritol, polypentaerythritol, stearic acid half esters of pentaerythritol or dipentaerythritol, bis(dipentaerythritol) adipate, glycerin, and tris(2-hydroxyethyl)isocyanurate.

Examples of the above-described ultraviolet absorbers include 2-hydroxybenzophenones such as 2,4-dihydroxybenzophenone, 2-hydroxy-4-methoxybenzophenone, 2-hydroxy-4-octoxybenzophenone and 5,5'-methylene-bis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylene-bis(4-tert-octyl-6-benzotriazolylphenol) and polyethylene glycol ester of 2-(2-hydroxy-3-tert-butyl-5-carboxyphenyl)benzotriazole; benzoates such as phenyl salicylate, resorcinol monobenzoate, 2,4-di-tert-butylphenyl-3,5-di-tert-butyl-4-hydroxybenzoate and hexadecyl-3,5-di-tert-butyl-4-hydroxybenzoate; substituted oxanilides such as 2-ethyl-2'-ethoxyoxanilide and 2-ethoxy-4'-dodecyloxanilide; and cyanoacrylates such as ethyl-α-cyano-β,β-diphenylacrylate and methyl-2-cyano-3-methyl-3 -(p-methoxyphenyl)acrylate.

Examples of the hindered amine-based light stabilizers include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)butane tetracarboxylate, tetrakis(1,2,2,6,6-pentamethyl-4-piperidyl)butane tetracarboxylate, bis(1,2,2,6,6-pentamethyl-4-piperidyl)-di(tridecyl)-1,2,3,4-butane tetracarboxylate, bis(1,2,2,6,6-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/dibromoethane polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino-s-triazine-6-ylamino]undecane, and 1,6,11-tris [2,4-bis(N-butyl-N-(1,2,2, 6,6-pentamethyl-4-piperidyl)amino-s-triazine-6-ylamino]undecane.

Examples of the inorganic stabilizers that can be used include magnesium silicate, calcium silicate, barium silicate, silicic anhydride, zeolite, magnesium oxide, magnesium hydroxide, calcium oxide, calcium hydroxide, amorphous aluminosilicate, sodium perchlorate, magnesium perchlorate and barium perchlorate.

Examples of the long-chain fatty acids that can be used include capric acid, neodecanoic acid, undecylenic acid, lauric acid, myristic acid, palmitic acid, stearic acid, isostearic acid, 12-hydroxystearic acid, chlorostearic acid, 12-ketostearic acid, ricinoleic acid, linoleic acid, linolenic acid, oleic acid, arachic acid, behenic acid, erucic acid and brassidic acid.

Examples of the lubricants that can be used include hydrocarbons such as natural paraffin and low-molecular-weight polyethylenes; fatty acids such as stearic acid, lauric acid and erucic acid; aliphatic alcohols such as cetyl alcohol and stearyl alcohol; fatty acid amides such as stearic acid amide and methylene-bis-stearamide; lower alcohol esters of fatty acids, such as butyl stearate; and higher alcohol esters of higher fatty acids, such as glycerol monostearate.

Examples of the fillers include calcium carbonate, silica, clay, glass beads, mica, sericite, glass flakes, asbestos, wollastonite, potassium titanate, PMF, gypsum fibers, xonotlite, MOS, phosphate fibers, glass fibers, carbon fibers and aramid fibers.

Examples of the pigments include red iron oxide, chrome yellow, ultramarine blue pigment, carbon black, azo-based pigments, phthalocyanine-based pigments, quinacridone-based pigments and dioxazine pigments.

Further, in the resin composition for a printing film according to the present invention, a stabilization aid normally used in vinyl chloride-based resins may be added. Examples of such a stabilization aid include diphenylthiourea, anilinodithiotriazine, melamine, benzoic acid, cinnamic acid and p-tert-butyl benzoic acid.

In addition, in the resin composition for a printing film according to the present invention, as required, an additive(s) normally used in vinyl chloride-based resins, for example, a cross-linking agent, an antistatic agent, an anti-fogging agent, an anti-plate-out agent, a surface treatment agent, a flame retardant, a fluorescent agent, an antifungal agent, an antibacterial agent, a foaming agent, a metal inactivator, a mold-release agent, a processing aid, an antioxidant and/or a light stabilizer, may also be incorporated. The amount of these additives to be added can be selected as appropriate in accordance with their types and the like; however, the total amount of the additives is preferably 200 parts by mass or less with respect to 100 parts by mass of the vinyl chloride-based resin.

The printing film of the present invention is obtained by molding the resin composition for a printing film according to the present invention. The thickness of the film is preferably 0.01 to 1 mm. The printing film of the present invention has excellent printability and, therefore, can be suitably used as a film for printing (film to be printed) regardless of the printing method which may be gravure printing, screen printing, rotary screen printing, flexographic printing or the like. Further, after being subjected to printing, the resulting printed film can be used in a wide variety of applications, including packages of wrapping materials, stickers and toys.

The molding method is not particularly restricted and the printing film can be produced by, for example, roll processing, extrusion molding, melt casting or compression molding.

### EXAMPLES

The resin composition for a printing film according to the present invention will now be described in more detail by way of examples thereof; however, the present invention is not restricted thereto.

A resin composition prepared by blending the respective components in accordance with the below-described Formulation Example was kneaded on a roll for 5 minutes at 180°C and 30 rpm. Then, the resultant was pressed at 180°C for 5 minutes to prepare a sheet of 1 mm in thickness and 30 cm × 15 cm in size, and the yellowness of the thus obtained sheet was measured. In addition, the yellowness was measured also for a sheet prepared by pressing the resin composition for 30 minutes under the same conditions. From this sheet, a test piece of 5 cm × 15 cm in size was prepared and heated in a 190°C Geer oven to measure the time required for the test piece to be blackened, and the thermal stability was evaluated.

Further, a resin composition prepared by blending the respective components in accordance with the below-described Formulation Example was kneaded at 180°C and 30 rpm, and the time required for adhesion of the resin composition was evaluated as the mill adhesion time (minutes).

Moreover, in order to evaluate the printability, a resin composition prepared by blending the respective components in accordance with the below-described Formulation Example was kneaded on a roll for 5 minutes at 180°C and 30 rpm to produce a 0.2 mm-thick film, from which a 5 cm × 15 cm test piece was prepared. This test piece was coated with a red ink using a bar coater and left to stand for 10 minutes. Then, a polyester tape was attached to the coated surface and press-adhered by applying a roller thereto for several times. A vinyl tape was further attached on the polyester tape.

Thereafter, about a half of the tape was slowly peeled off and the remaining half was quickly peeled off so as to evaluate the printability based on the amount of the red ink adhered to the polyester tape.

As for the evaluation criteria of the printability, a score of "1" was given when no red ink was adhered to the polyester tape and a score of "10" was given when the red ink was adhered to the entire surface, with a higher score being given as the adhered amount increased.

The printability was evaluated in the same manner also for films that were subjected to deterioration under the conditions of 40°C × 80% RH × one week (moist heat) or 50°C × one week (dry heat).

The results of these evaluations are shown in Table 1 below.

### [Formulation Example]

| | Blended amount (parts by mass) |
|---|---|
| Polyvinyl chloride resin (polymerization degree: 1,050, manufactured by Shin Dai-ichi Vinyl Corporation) | 100 |
| Di-2-ethylhexyl phthalate | 23 |
| Epoxidized soybean oil | 2 |
| Zinc stearate | 0.2 |
| Hydrotalcite (Formula: Mg₄Al₂(OH)₁₂CO₃·3H₂O) | 0.8 |
| Test compound | as shown in Table 1 or 2 below |

**[Table 1]**

| | | | | Example | | | | | | |
|---|---|---|---|---|---|---|---|---|---|---|
| | | | | 1-1 | 1-2 | 1-3 | 1-4 | 1-5 | 1-6 | 1-7 |
| Test Compound | BT-1^{*1} | | | 0.02 | 0.02 | 0.01 | 0.02 | - | - | - |
| | BT-2^{*2} | | | - | - | - | - | - | 0.02 | 0.02 |
| | SA-1^{*3} | | | 0.02 | 0.01 | 0.02 | - | 0.02 | 0.02 | 0.02 |
| | BD-1^{*4} | | | 0.14 | 0.14 | 0.14 | 0.14 | 0.14 | 0.14 | - |
| | BD-2^{*5} | | | - | - | - | - | - | - | 0.14 |
| | PA-1^{*6} | | | 0.05 | 0.05 | 0.05 | 0.05 | 0.05 | 0.05 | 0.05 |
| Test results | Blackening time (min) | | | 150 | 140 | 140 | 120 | 130 | 150 | 150 |
| | Yellowness | | 5 min | 17.8 | 18.1 | 18.2 | 18.6 | 19.2 | 19.3 | 18.8 |
| | | | 30 min | 23.5 | 25.4 | 24.8 | 28.1 | 28.8 | 24.4 | 25.6 |
| | Mill adhesion time | | | 41 | 40 | 40 | 39 | 43 | 45 | 40 |
| | Printability | original | | 1 | 1 | 1 | 1 | 1 | 1 | 1 |
| | | moist heat | | 2 | 3 | 2 | 2 | 4 | 2 | 3 |
| | | dry heat | | 2 | 1 | 3 | 2 | 3 | 2 | 3 |

| | | | | | | | | | | |
|---|---|---|---|---|---|---|---|---|---|---|
| *1: 1,2,3-benzotriazole *2: 5-methyl-1,2,3-benzotriazole *3: N-(1,2,4-triazol-3-yl)salicylamide *4: dibenzoylmethane *5: stearoylbenzoylmethane *6: tetrakis[methylene-3-(3,5-di-tert-butyl-4-hydroxyphenyl)propionate]methane | | | | | | | | | | |

**[Table 2]**

| | | | | Comparative Example | | | | |
|---|---|---|---|---|---|---|---|---|
| | | | | 1-1 | 1-2 | 1-3 | 1-4 | 1-5 |
| Test compound | BT-1^{*1} | | | - | 0.02 | 0.02 | 0.02 | 0.02 |
| | BT-2^{*2} | | | - | - | - | - | - |
| | SA-1^{*3} | | | - | 0.02 | - | 0.02 | - |
| | BD-1^{*4} | | | - | - | - | 0.14 | 0.14 |
| | PA-1^{*6} | | | 0.05 | 0.05 | 0.05 | - | - |
| Test results | Blackening time (min) | | | 90 | 110 | 100 | 100 | 90 |
| | Yellowness | | 5 min | 18.6 | 28.6 | 28.9 | 18.9 | 19.2 |
| | | | 30 min | 37.7 | 67.5 | 63.6 | 39.1 | 36.8 |
| | Mill adhesion time | | | 27 | 35 | 34 | 33 | 31 |
| | Printability | original | | 8 | 4 | 4 | 4 | 5 |
| | | moist heat | | 10 | 7 | 6 | 8 | 8 |
| | | dry heat | | 10 | 7 | 7 | 8 | 7 |

As clearly seen from the results shown in Tables 1 and 2 above, even in those cases where the β-diketone compound and phenolic antioxidant were used in the vinyl chloride resin, when no benzotriazole compound and/or salicylamide was used, the heat resistance was hardly improved and the printability was reduced.

In addition, even in those cases where the benzotriazole compound and/or salicylamide was/were used, the colorability was markedly reduced when no β-diketone compound was used, and sufficient heat resistance was not attained when no phenolic antioxidant was used.

In contrast, by the results of Examples, it was revealed that, by adding a combination of a benzotriazole compound and/or salicylamide, a β-diketone compound and a phenolic antioxidant to a vinyl chloride-based resin, the synergistic effect thereof not only improves the colorability and heat resistance but also markedly improves the printability.

## Claims

1. Use of a film for printing wherein the film is obtained by molding a resin composition, **characterized by** comprising, with respect to 100 parts by mass of a vinyl chloride-based resin:
(A) 0.001 to 1 part by mass of (a-1) at least one benzotriazole compound represented by the following Formula (I) and/or (a-2) at least one salicylamide compound represented by the following Formula (II);
(B) 0.001 to 1 part by mass of a β-diketone compound; and
(C) 0.001 to 1 part by mass of a phenolic antioxidant: 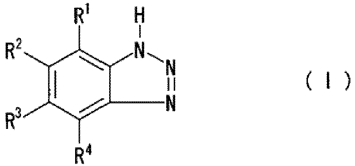 wherein, R¹, R², R³ and R⁴ each independently represent a hydrogen atom, a halogen atom, a hydroxy group, a nitro group, a carboxyl group, an alkyl group having 1 to 12 carbon atoms, an alkoxycarbonyl group having 2 to 12 carbon atoms, or an alkanoylamino group having 1 to 12 carbon atoms 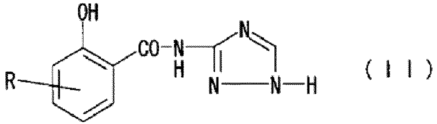 wherein, R represents a hydrogen atom, an alkyl group having 1 to 12 carbon atoms, or an alkoxy group having 1 to 12 carbon atoms.

2. The use according to claim 1 wherein the printing is gravure printing, screen printing, rotary screen printing or flexographic printing.

3. The use according to claim 1 or claim 2, wherein said benzotriazole compound, which is said (a-1) component, is 1,2,3-benzotriazole.

4. The use according to any of claims 1 to 3, wherein said salicylamide compound, which is said (a-2) component, is N-(1,2,4-triazol-3-yl)salicylamide.

5. The use according to any preceding claim, wherein said β-diketone compound is dibenzoylmethane, palmitoylbenzoylmethane or stearoylbenzoylmethane.

6. The use according to any preceding claim, wherein said β-diketone compound is blended in an amount of 0.005 to 0.5 parts by mass, with respect to 100 parts by mass of a vinyl chloride-based resin.

7. The use according to any preceding claim, wherein said phenolic antioxidant has one to four 3,5-di-tert-butyl-4-hydroxyphenyl structures, and is preferably tetrakis[methylene-3-(3,5-di-tert-butyl-4-hydroxyphenyl)propionate]methane.

8. The use according to any preceding claim, wherein said phenolic antioxidant is blended in an amount of 0.005 to 0.5 parts by mass, with respect to 100 parts by mass of a vinyl chloride-based resin.

9. The use according to any preceding claim, wherein said vinyl chloride-based resin is polyvinyl chloride.

10. The use according to any preceding claim, wherein the resin composition further comprises a metallic stabilizer in an amount of 0.05 to 10 parts by mass with respect to 100 parts by mass of the vinyl chloride-based resin, preferably wherein said metallic stabiliser is zinc stearate.

11. The use according to any preceding claim, wherein the resin composition further comprises a plasticizer in an amount of 10 to 100 parts by mass with respect to 100 parts by mass of the vinyl chloride-based resin, preferably wherein said stabilizer is a phthalate-based plasticizer.

12. The use according to any preceding claim, wherein the resin composition further comprises hydrotalcite compounds, preferably wherein said hydrotalcite compounds are coated with stearic acid, alkali metal oleate, alkali metal dodecylbenzenesulfonate, or a wax.

13. The use according to claim 1 or 2, wherein the film has a thickness of 0.01 to 1 mm.

14. The use according to claim 1 or 2 wherein the resin composition is molded by roll processing, extrusion molding, melt casting or compression molding.

## Patentansprüche

1. Gebrauch einer Folie zum Drucken, wobei die Folie erhalten wird durch Formen einer Harzzusammensetzung, **dadurch gekennzeichnet, dass** sie Folgendes umfasst, mit Bezug auf 100 Masseanteile eines Harzes auf Vinylchloridbasis:
(A) 0,001 bis 1 Masseanteil (a-1) wenigstens einer Benzotriazolverbindung, dargestellt durch die folgende Formel (I) und/oder (a-2) wenigstens einer Salicylamidverbindung, dargestellt durch die folgende Formel (II);
(B) 0,001 bis 1 Masseanteile einer β-Diketonverbindung; und
(C) 0,001 bis 1 Masseanteile eines Phenolantioxidans: 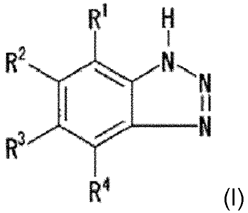 wobei R¹, R², R³ und R⁴ jeweils unabhängig Folgendes darstellen: ein Wasserstoffatom, ein Halogenatom, eine Hydroxygruppe, eine Nitrogruppe, eine Carboxylgruppe, eine Alkylgruppe mit 1 bis 12 Kohlenstoffatomen, eine Alkoxycarbonylgruppe mit 2 bis 12 Kohlenstoffatomen oder eine Alkanoylaminogruppe mit 1 bis 12 Kohlenstoffatomen 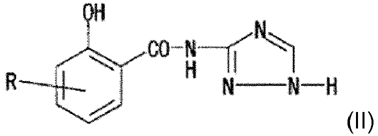 wobei R ein Wasserstoffatom, eine Alkylgruppe mit 1 bis 12 Kohlenstoffatomen oder eine Alkoxygruppe mit 1 bis 12 Kohlenstoffatomen darstellt.

2. Gebrauch nach Anspruch 1, wobei das Drucken Gravurdrucken, Siebdrucken, Rotationsdrucken oder Flexodrucken ist.

3. Gebrauch nach Anspruch 1 oder 2, wobei die Benzotriazolverbindung, bei der es sich um die Komponente (a-1) handelt, 1,2,3-Benzotriazol ist.

4. Gebrauch nach einem der Ansprüche 1 bis 3, wobei die Salicylamidverbindung, bei der es sich um die Komponente (a-2) handelt, N-(1,2,4-Triazol-3-yl)salicylamid ist.

5. Gebrauch nach einem der vorhergehenden Ansprüche, wobei die β-Diketonverbindung Dibenzoylmethan, Palmitoylbenzoylmethan oder Stearoylbenzoylmethan ist.

6. Gebrauch nach einem der vorhergehenden Ansprüche, wobei die β-Diketonverbindung in einer Menge von 0,005 bis 0,5 Masseanteilen mit Bezug auf 100 Masseanteile eines Harzes auf Vinylchloridbasis zugemischt ist.

7. Gebrauch nach einem der vorhergehenden Ansprüche, wobei das phenolische Antioxidans eine bis vier 3,5-Di-tert-butyl-4-hydroxyphenylstrukturen aufweist und wobei es sich dabei vorzugsweise um Tetrakis[methylen-3-(3,5-di-tert-butyl-4-hydroxyphenyl)propionat]methan handelt.

8. Gebrauch nach einem der vorhergehenden Ansprüche, wobei das phenolische Antioxidans in einer Menge von 0,005 bis 0,5 Masseanteilen mit Bezug auf 100 Masseanteile eines Harzes auf Vinylchloridbasis zugemischt ist.

9. Gebrauch nach einem der vorhergehenden Ansprüche, wobei das Harz auf Vinylchloridbasis Polyvinylchlorid ist.

10. Gebrauch nach einem der vorhergehenden Ansprüche, wobei die Harzzusammensetzung ferner einen metallischen Stabilisator in einer Menge von 0,05 bis 10 Masseanteilen mit Bezug auf 100 Masseanteile des Harzes auf Vinylchloridbasis umfasst, vorzugsweise wobei der metallische Stabilisator Zinkstearat ist.

11. Gebrauch nach einem der vorhergehenden Ansprüche, wobei die Harzzusammensetzung ferner einen Weichmacher in einer Menge von 10 bis 100 Masseanteilen mit Bezug auf 100 Masseanteile des Harzes auf Vinylchloridbasis umfasst, vorzugsweise wobei der Stabilisator ein Weichmacher auf Phthalatbasis ist.

12. Gebrauch nach einem der vorhergehenden Ansprüche, wobei die Harzzusammensetzung ferner Hydrotalcitverbindungen umfasst, vorzugsweise wobei die Hydrotalcitverbindungen mit Stearinsäure, Alkalimetalloleat, Alkalimetalldodecylbenzolsulfonat oder mit einem Wachs beschichtet sind.

13. Gebrauch nach Anspruch 1 oder 2, wobei die Folie eine Dicke von 0,01 bis 1 mm aufweist.

14. Gebrauch nach Anspruch 1 oder 2, wobei die Harzzusammensetzung durch Walzverarbeiten, Extrusionsformen, Schmelzgießen oder Formpressen geformt wird.

## Revendications

1. Utilisation d'un film d'impression dans laquelle le film est obtenu en moulant une composition de résine, **caractérisée en ce qu'**elle comprend, pour 100 parties en masse d'une résine à base de chlorure de vinyle :
(A) de 0,001 à 1 partie en masse (a-1) d'au moins un composé benzotriazole représenté par la formule (I) suivante et/ou (a-2) au moins un composé salicylamide représenté par la formule (II) suivante ;
(B) de 0,001 à 1 partie en masse d'un composé β-dicétone ; et
(C) de 0,001 à 1 partie en masse d'un antioxydant phénolique : 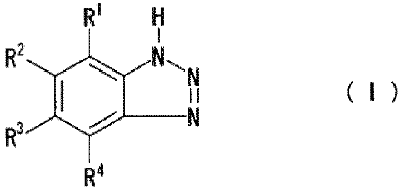 dans laquelle, R¹, R², R³ et R⁴ représentent chacun indépendamment un atome d'hydrogène, un atome d'halogène, un groupe hydroxy, un groupe nitro, un groupe carboxyle, un groupe alkyle ayant de 1 à 12 atomes de carbone, un groupe alcoxycarbonyle ayant de 2 à 12 atomes de carbone ou un groupe alcanoylamino ayant de 1 à 12 atomes de carbone 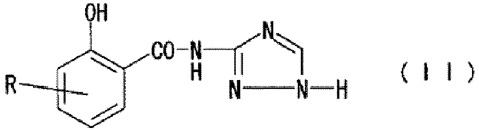 dans laquelle, R représente un atome d'hydrogène, un groupe alkyle ayant de 1 à 12 atomes de carbone ou un groupe alcoxy ayant de 1 à 12 atomes de carbone.

2. Utilisation selon la revendication 1 dans laquelle l'impression est l'impression en creux, la sérigraphie, l'impression au cadre rotatif ou l'impression flexographique.

3. Utilisation selon la revendication 1 ou la revendication 2, dans laquelle ledit composé benzotriazole, qui est ledit (a-1) composant, est du 1,2,3-benzotriazole.

4. Utilisation selon l'une quelconque des revendications 1 à 3, dans laquelle ledit composé salicylamide, qui est ledit (a-2) composant, est du N-(1,2,4-triazol-3-yl)salicylamide.

5. Utilisation selon l'une quelconque des revendications précédentes, dans laquelle le composé β-dicétone est du dibenzoylméthane, du palmitoylbenzoylméthane ou du stéaroylbenzoylméthane.

6. Utilisation selon l'une quelconque des revendications précédentes, dans laquelle ledit composé β-dicétone est mélangé dans une quantité comprise entre 0,005 et 0,5 partie en masse, pour 100 parties en masse d'une résine à base de chlorure de vinyle.

7. Utilisation selon l'une quelconque des revendications précédentes, dans laquelle ledit antioxydant phénolique a une à quatre structures de 3,5-di-tert-butyl-4-hydroxyphényl, et est de préférence du tétrakis[méthylène-3-(3,5-di-tert-butyl-4-hydroxyphényl)propionate]méthane.

8. Utilisation selon l'une quelconque des revendications précédentes, dans laquelle ledit antioxydant phénolique est mélangé dans une quantité comprise entre 0,005 et 0,5 partie en masse, pour 100 parties en masse d'une résine à base de chlorure de vinyle.

9. Utilisation selon l'une quelconque des revendications précédentes, dans laquelle ladite résine à base de chlorure de vinyle est du polychlorure de vinyle.

10. Utilisation selon l'une quelconque des revendications précédentes, dans laquelle la composition de résine comprend en outre un stabilisant métallique dans une quantité comprise entre 0,05 et 10 parties en masse pour 100 parties en masse de la résine à base de chlorure de vinyle, de préférence dans laquelle ledit stabilisant métallique est du stéarate de zinc.

11. Utilisation selon l'une quelconque des revendications précédentes, dans laquelle la composition de résine comprend en outre un plastifiant dans une quantité comprise entre 10 et 100 parties en masse pour 100 parties en masse de la résine à base de chlorure de vinyle, de préférence dans laquelle ledit stabilisant est un plastifiant à base de phtalate.

12. Utilisation selon l'une quelconque des revendications précédentes, dans laquelle la composition de résine comprend en outre des composés hydrotalcite, de préférence dans laquelle lesdits composés hydrotalcite sont revêtus d'acide stéarique, d'oléate de métaux alcalins, de dodécylbenzènesulfonate de métaux alcalins ou d'une cire.

13. Utilisation selon la revendication 1 ou 2, dans laquelle le film a une épaisseur comprise entre 0,01 et 1 mm.

14. Utilisation selon la revendication 1 ou 2, dans laquelle la composition de résine est moulée par laminage, par moulage par extrusion, par moulage par fusion ou par moulage par compression.
